# EUROPÄISCHE PATENTSCHRIFT

(11) **EP 3 214 282 B1**
(45) Veröffentlichungstag und Bekanntmachung des Hinweises auf die Patenterteilung: **24.04.2019**
(21) Anmeldenummer: 16195260.1
(22) Anmeldetag: 24.10.2016
(51) Int. Cl.: F01N 3/022

(54) **PARTIKELFILTER FÜR EINE ABGASANLAGE SOWIE VERFAHREN ZUM HERSTELLEN EINES PARTIKELFILTERS**
PARTICULATE FILTER FOR AN EXHAUST SYSTEM AND METHOD FOR PRODUCING A PARTICULATE FILTER
FILTRE À PARTICULES POUR UN SYSTÈME D'ÉCHAPPEMENT ET PROCÉDÉ DE FABRICATION D'UN FILTRE À PARTICULES

(30) Priorität: 02.03.2016 DE 102016002517
(43) Veröffentlichungstag der Anmeldung: 06.09.2017
(73) Patentinhaber: AUDI AG, 85045 Ingolstadt (DE)
(72) Erfinder: Maischak, Peter, 85120 Hepberg (DE); Knackstedt, Felix, 85049 Ingolstadt (DE)

(56) Entgegenhaltungen:
- EP-A1- 1 491 257
- EP-A1- 1 961 930
- FR-A1- 2 234 456
- JP-A- S 614 813
- US-A1- 2005 235 622
- US-A1- 2008 190 081

## Beschreibung

Die Erfindung betrifft einen Partikelfilter für eine Abgasanlage, insbesondere eines Kraftfahrzeugs, mit einem einen Abgaseinlass und einen Abgasauslass aufweisenden Gehäuse und einem in dem Gehäuse angeordneten porösen Filterkörper, wobei der Filterkörper eine Vielzahl von gerade und strömungstechnisch parallel verlaufenden Strömungskanälen aufweist und bezüglich seiner Längsmittelachse konisch ist, wobei die Strömungskanäle jeweils eine parallel zu der Längsmittelachse des Filterkörpers verlaufende Längsmittelachse aufweisen, und wobei der Filterkörper auf der Einlassseite einen größeren Querschnitt aufweist als auf der Auslassseite, sodass sich nur ein Teil der Strömungskanäle bis hin zur Auslassseite erstreckt. Die Erfindung betrifft weiterhin ein Verfahren zum Herstellen eines Partikelfilters.

Die Abgasanlage kann einer Abgas erzeugenden Einrichtung, beispielsweise einer Brennkraftmaschine oder dergleichen, zugeordnet sein. Die Abgasanlage dient dem Abführen des Abgases von der abgaserzeugenden Einrichtung in Richtung beziehungsweise in eine Außenumgebung. Die Abgasanlage weist mindestens eine Abgasreinigungseinrichtung auf, nämlich den Partikelfilter. Dieser dient dem Entfernen von Partikeln, beispielsweise Rußpartikeln, aus dem die Abgasanlage durchströmenden Abgas. Neben dem Partikelfilter kann selbstverständlich wenigstens eine weitere Abgasreinigungseinrichtung, beispielsweise ein Katalysator und/oder ein weiterer Partikelfilter, in der Abgasanlage vorliegen. Dem Partikelfilter wird das die Abgasanlage durchströmende Abgas zugeführt, insbesondere das gesamte Abgas.

Aus dem Stand der Technik ist beispielsweise die Druckschrift FR 2 234 456 A1 bekannt, welche einen Partikelfilter mit den Merkmalen des Oberbegriffs des Anspruchs 1 zeigt. Ein weiterer Partikelfilter wird von der Druckschrift US 2005/0235622 A1 offenbart.

Es ist nun Aufgabe der Erfindung, einen Partikelfilter für eine Abgasanlage vorzuschlagen, welche gegenüber bekannten Partikelfiltern Vorteile aufweist, insbesondere eine bessere Bauraumnutzung bei gleichzeitig erhöhtem Wirkungsgrad erzielt.

Dies wird erfindungsgemäß mit einem Partikelfilter mit den Merkmalen des Anspruchs 1 erreicht. Dabei ist vorgesehen, dass erste der Strömungskanäle jeweils einen Querschnitt aufweisen, der kleiner ist als ein Querschnitt von zweiten der Strömungskanäle, und der Filterkörper mit einer durch ein Beschichten des Filterkörpers hergestellten geschlossenen Mantelfläche versehen ist, die fluiddicht ist und die zweiten der Strömungskanäle in axialer Richtung verschließt.

Der Partikelfilter verfügt über das Gehäuse sowie den Filterkörper, der in dem Gehäuse angeordnet ist. Das Gehäuse umgreift den Filterkörper vorzugsweise vollständig, insbesondere in Umfangsrichtung bezüglich einer Längsmittelachse des Filterkörpers. Das Gehäuse weist den Abgaseinlass sowie den Abgasauslass auf. Dem Abgaseinlass ist dabei beispielsweise ein Abgaseinlassanschluss und dem Abgasauslass ein Abgasauslassanschluss zugeordnet, wobei über diese bevorzugt jeweils eine Abgasleitung an den Abgaseinlass und den Abgasauslass angeschlossen ist.

Der Filterkörper besteht bevorzugt aus einem porösen Material, beispielsweise aus Keramik. Beispielsweise kommt Siliziumkarbid (SiC), Cordierit oder ein ähnliches Material zum Einsatz. Der Filterkörper wird bevorzugt durch Extrudieren aus dem Material hergestellt. Bei dem Extrudieren können auch die strömungstechnisch parallel verlaufenden Strömungskanäle in dem Filterkörper ausgebildet werden. Über wenigstens einen Teil der Strömungskanäle ist der Abgaseinlass mit dem Abgasauslass strömungsverbunden. In dem Filterkörper ist eine große Anzahl an Strömungskanälen ausgebildet.

Dabei ist es vorzugsweise vorgesehen, dass das Abgas zu einem Wechsel des durchströmten Strömungskanals gezwungen wird, beispielsweise durch Verschließen wenigstens eines der Strömungskanäle. Strömt das Abgas in den verschlossenen Strömungskanal ein, so muss es durch den porösen Filterkörper hindurch in einen anderen der Strömungskanäle überströmen, durch welchen es anschließend hin zu dem Abgasauslass strömen kann.

Der Filterkörper wird mit der geschlossenen Mantelfläche versehen, welche fluiddicht ist, also einen Durchtritt des Abgases nicht zulässt. Die Mantelfläche kann beispielsweise während des Extrudierens oder durch einen nach dem Extrudieren erfolgenden Bearbeitungsschritt aufgebracht werden. Beispielsweise wird die Mantelfläche durch ein Beschichten des porösen Filterkörpers hergestellt.

Der Filterkörper weist eine Längsmittelachse auf, welche sich ausgehend von einer Einlassseite des Filterkörpers hin zu einer Auslassseite des Filterkörpers erstreckt. Bezüglich dieser Längsmittelachse ist der Filterkörper konisch ausgestaltet, er weist also die Form eines Drehkegelstumpfs auf. Der Filterkörper verfügt über die Mantelfläche, welche zwei stirnseitige Flächen miteinander verbindet. Diese Flächen können als Grundfläche und Deckfläche bezeichnet werden. Eine der Flächen liegt auf der Einlassseite, die andere auf der Auslassseite des Filterkörpers vor. Die beiden Flächen sind vorzugsweise parallel zueinander angeordnet. Zur Erzielung der konischen Form haben sie unterschiedliche Flächeninhalte. Beispielsweise sind die Flächen bezüglich der Längsmittelachse zentriert angeordnet.

Trotz der konischen Form des Filterkörpers ist es vorgesehen, dass die Strömungskanäle jeweils parallel zu der Längsmittelachse des Filterkörpers verlaufen. In anderen Worten weisen sie jeweils eine Längsmittelachse auf, welche zu der Längsmittelachse des Filterkörpers parallel verläuft. Das bedeutet jedoch, dass aufgrund der konischen Form des Filterkörpers nicht alle Strömungskanäle den Filterkörper in axialer Richtung bezüglich seiner Längsmittelachse vollständig durchgreifen.

So kann es vorkommen, dass zumindest einer oder einige der Strömungskanäle zumindest teilweise oder sogar vollständig von der Mantelfläche versperrt sind, sodass in ihnen strömendes Abgas nicht vollständig den Filterkörper durchströmen kann. Vielmehr wird das Abgas durch die Begrenzung des Strömungskanals durch die Mantelfläche dazu gezwungen, den porösen Filterkörper in Richtung eines anderen der Strömungskanäle zu durchtreten. Hierdurch wird eine hervorragende Reinigungsleistung des Partikelfilters erzielt. Die konische Form des Filterkörpers macht es zudem möglich, den Partikelfilter besonders platzsparend und flexibel anordenbar auszugestalten.

Eine Weiterbildung der Erfindung sieht vor, dass auf einer dem Abgaseinlass zugewandten Einlassseite des Filterkörpers sowie auf einer dem Abgasauslass zugewandten Auslassseite jeweils mehrere der Strömungskanäle zumindest teilweise mittels eines eingebrachten Verschlussstopfens verschlossen sind. Der Verschlussstopfen beziehungsweise die Verschlussstopfen erstrecken sich jeweils lediglich über einen Bruchteil des Filterkörpers in axialer Richtung. Beispielsweise weist der Verschlussstopfen in axialer Richtung eine Erstreckung auf, welche höchstens 5 %, höchstens 2,5 %, höchstens 1 %, höchstens 0,5 % oder höchstens 0,1 % der Längserstreckung des Filterkörpers in axialer Richtung beträgt.

Der Verschlussstopfen ist derart ausgestaltet, dass er denjenigen der Strömungskanäle, in welchem er angeordnet ist, vollständig strömungstechnisch verschließt. Der Verschlussstopfen kann entweder auf der Einlassseite oder auf der Auslassseite des Filterkörpers in dem Strömungskanal angeordnet sein. Entsprechend wird entweder das Einströmen des über den Abgaseinlass bereitgestellten Abgases in den jeweiligen Strömungskanal oder das Ausströmen aus dem Strömungskanal in Richtung des Abgasauslasses unterbunden. Entsprechend muss das in dem Strömungskanal vorliegende Abgas wiederum den porösen Filterkörper in Richtung eines anderen Strömungskanals durchströmen, insbesondere in Richtung eines Strömungskanals, der sich bis hin zu der Auslassseite erstreckt und auf dieser unverschlossen ist. Bevorzugt werden sowohl auf der Einlassseite als auf der Auslassseite jeweils mehrere der Strömungskanäle mittels eines solchen Verschlussstopfens verschlossen.

Die Erfindung sieht vor, dass der Filterkörper auf der Einlassseite einen größeren Querschnitt aufweist als auf der Auslassseite, sodass sich nur ein Teil der Strömungskanäle bis hin zur Auslassseite erstreckt. Vorstehend wurde bereits darauf hingewiesen, dass aufgrund der konischen Form des Filterkörpers nicht alle Strömungskanäle den Filterkörper vollständig durchgreifen können. Es ist nun vorgesehen, dass der Filterkörper auf der Einlassseite die Grundfläche und auf der Auslassseite die Deckfläche des Kegelstumpfs aufweist, wobei die Grundfläche größer ist als die Deckfläche, insbesondere über einen größeren Flächeninhalt verfügt.

Das bedeutet, dass ein Teil der Strömungskanäle auf der Einlassseite des Filterkörpers beginnt, jedoch sich nicht bis hin zu der Auslassseite erstreckt, sondern vielmehr zuvor von der Mantelfläche begrenzt beziehungsweise verschlossen ist. Entsprechend erstreckt sich nur ein anderer Teil der Strömungskanäle bis hin zu der Auslassseite, insbesondere ausgehend von der Einlassseite. Diese Strömungskanäle weisen bevorzugt in axialer Richtung jeweils einen gleichbleibenden Querschnitt auf.

Im Rahmen einer weiteren Ausgestaltung der Erfindung ist vorgesehen, dass auf der Einlassseite diejenigen Strömungskanäle verschlossen sind, die auf der Auslassseite austreten und unverschlossen sind. Auf der Auslassseite sind bevorzugt Strömungskanäle verschlossen, welche den Filterkörper in axialer Richtung vollständig durchgreifen, also ausgehend von der Einlassseite bis hin zu der Auslassseite verlaufen, auch wenn dabei teilweise der Durchströmungsquerschnitt eines Teils der Strömungskanäle aufgrund der Mantelfläche in Richtung der Auslassseite verringert ist. Es ist nun vorgesehen, dass zumindest ein Teil der Strömungskanäle auf der Einlassseite verschlossen wird, welche auf der Auslassseite austreten, also sich in axialer Richtung durch den gesamten Filterkörper hindurch erstrecken und zudem auf der Auslassseite unverschlossen sind, also auf der Auslassseite nicht mit einem Verschlussstopfen versehen sind.

Selbstverständlich kann nur ein Teil dieser Strömungskanäle auf der Einlassseite verschlossen werden. Besonders bevorzugt gilt dies jedoch für alle Strömungskanäle, für welche die genannten Bedingungen zutreffen. Alle Strömungskanäle, die sich ausgehend von der Einlassseite durch den gesamten Filterkörper hindurch bis auf die Auslassseite erstrecken, sind also jeweils entweder auf der Einlassseite oder auf der Auslassseite verschlossen, insbesondere mittels eines Verschlussstopfens gemäß den vorstehenden Ausführungen.

Im Rahmen einer weiteren Ausgestaltung der Erfindung kann vorgesehen sein, dass sich der Filterkörper über ein an der Mantelfläche anliegendes Halteelement an einer konischen Innenwand des Gehäuses abstützt. Im Rahmen des beschriebenen Partikelfilters ist also sowohl der Filterkörper als auch die Innenwand des Gehäuses konisch. Daraus folgt, dass auch das gesamte Gehäuse, insbesondere eine Außenseite des Gehäuses, konisch sein kann. Vorzugsweise liegt - im Längsschnitt bezüglich der Längsmittelachse des Filterkörpers gesehen - die Mantelfläche parallel zu der Innenwand. Das bedeutet, dass der Filterkörper über seine axiale Erstreckung bei gerader Anordnung in dem Gehäuse an derselben Umfangsposition stets denselben Abstand zu der Innenwand des Gehäuses aufweist.

Zwischen dem Filterkörper beziehungsweise dessen Mantelfläche und der Innenwand des Gehäuses ist das Halteelement angeordnet. Bevorzugt umgreift das Halteelement den Filterkörper in Umfangsrichtung durchgehend. Das Halteelement ist vorzugsweise fluiddicht und liegt sowohl an der Mantelfläche als auch der Innenwand dichtend an, sodass das Abgas nicht zwischen der Mantelfläche und der Innenwand von dem Abgaseinlass bis hin zu dem Abgasauslass, also an dem Filterkörper vorbei, strömen kann.

Eine bevorzugte weitere Ausgestaltung der Erfindung sieht vor, dass das Halteelement elastisch ist. Das Halteelement lässt insoweit eine Verlagerung des Filterkörpers in dem Gehäuse in wenigstens eine Richtung zu. Beispielsweise erlaubt das Halteelement eine Verlagerung des Filterkörpers in dem Gehäuse in axialer und/oder radialer Richtung bezüglich der Längsmittelachse des Filterkörpers. Bei einer Verlagerung des Filterkörpers in dem Gehäuse wird das Halteelement elastisch verformt. Entsprechend bewirkt es auf den Filterkörper eine Rückstellkraft, welche auf ein Verlagern des Filterkörpers in seine Ausgangsstellung gerichtet ist.

Eine Weiterbildung der Erfindung sieht vor, dass der Filterkörper in axialer Richtung mit Spiel in dem Gehäuse angeordnet ist. Der Filterkörper ist bevorzugt in axialer Richtung lediglich mittels des Halteelements in dem Gehäuse gelagert. Weil jedoch das Halteelement elastisch ist, kann unter Verformung des Halteelements der Filterkörper in axiale Richtung verlagert werden. Der Filterkörper ist hierzu in wenigstens einer Stellung, insbesondere in axialer Richtung, ausschließlich über das Halteelement an dem Gehäuse gelagert.

Im Rahmen einer weiteren Ausführungsform der Erfindung kann vorgesehen sein, dass das Spiel des Filterkörpers in dem Gehäuse mittels wenigstens eines Endanschlags begrenzt ist. Um eine übermäßige Verlagerung des Filterkörpers, insbesondere in axialer Richtung, zu verhindern, ist der Endanschlag vorgesehen. Bevorzugt liegt dieser auf der die Einlassseite aufweisenden Seite des Filterkörpers vor. Weil sowohl der Filterkörper als auch die Innenwand des Gehäuses konisch sind, kann der Filterkörper ohnehin nur in begrenztem Ausmaß in Richtung seiner Auslassseite beziehungsweise in Richtung des Abgasauslasses verlagert werden, weil durch eine solche Verlagerung eine Komprimierung des Halteelements auftritt, welche nicht unbegrenzt zugelassen wird. Selbstverständlich kann jedoch zusätzlich oder alternativ der Endanschlag beziehungsweise ein weiterer Endanschlag auf der die Auslassseite aufweisenden Seite des Filterkörpers vorliegen.

Weiterhin ist im Rahmen der Erfindung vorgesehen, dass die ersten der Strömungskanäle jeweils einen Querschnitt aufweisen, der von einem Querschnitt von zweiten der Strömungskanäle verschieden ist. Einige der Strömungskanäle liegen insoweit als erste Strömungskanäle vor, während einige andere der Strömungskanäle als zweite Strömungskanäle vorliegen. Nachfolgend werden die ersten der Strömungskanäle der Einfachheit halber als erste Strömungskanäle und die zweiten der Strömungskanäle als zweite Strömungskanäle bezeichnet.

Die ersten Strömungskanäle und die zweiten Strömungskanäle sollen einen voneinander abweichenden Querschnitt aufweisen. Während also die ersten Strömungskanäle bevorzugt alle denselben Querschnitt, nämlich einen ersten Querschnitt, aufweisen, verfügen die zweiten Strömungskanäle ebenfalls über denselben Querschnitt, nämlich einen zweiten Querschnitt. Der erste Querschnitt ist von dem zweiten Querschnitt verschieden. Unter dem Querschnitt wird bevorzugt der Querschnitt der Strömungskanäle auf der Einlassseite des Filterkörpers verstanden, weil sich aufgrund der konischen Form des Filterkörpers beziehungsweise der Mantelfläche in Richtung der Auslassseite für einige der Strömungskanäle eine Verringerung des Querschnitts ergeben kann. Insoweit wird für jeden der Strömungskanäle jeweils der in axiale Richtung größte auftretende Querschnitt berücksichtigt.

Es ist erfindungsgemäß vorgesehen, dass die ersten Strömungskanäle einen kleineren Querschnitt aufweisen als die zweiten Strömungskanäle. Beispielsweise beträgt der Querschnitt der ersten Strömungskanäle bezogen auf den Querschnitt der zweiten Strömungskanäle höchstens 90 %, höchstens 80 %, höchstens 75 %, höchstens 70 %, höchstens 60 % oder höchstens 50 %.

Schließlich kann es vorgesehen sein, dass die ersten Strömungskanäle sich bis hin zur Auslassseite erstrecken und die zweiten Strömungskanäle zwischen der Einlassseite und der Auslassseite enden. Beispielsweise werden alle Strömungskanäle, welche den Filterkörper in axialer Richtung vollständig durchgreifen, also sich ausgehend von der Einlassseite bis hin zu der Auslassseite erstrecken, als erste Strömungskanäle verwendet. Diejenigen Strömungskanäle, welche von der Mantelfläche in axialer Richtung begrenzt sind, sodass sie den Filterkörper ausgehend von der Einlassseite in Richtung der Auslassseite lediglich teilweise durchgreifen, werden als zweite Strömungskanäle herangezogen.

Bei einer derartigen Ausgestaltung des Partikelfilters wird Abgas bei kleineren Abgasmassenströmen bevorzugt die ersten Strömungskanäle durchströmen, für welche sich ein kleinerer Druckverlust über den Filterkörper hinweg ergibt als für die zweiten Strömungskanäle. Somit kann insgesamt bei geringeren Abgasmassenströmen ein äußerst geringer Druckverlust des Partikelfilters bei gleichzeitig sehr guter Filterwirkung realisiert sein. Bei höheren Abgasmassenströmen dagegen strömt Abgas auch in die zweiten Strömungskanäle ein. Weil diese in axiale Richtung nicht durchgehend sind, wird das in ihnen strömende Abgas zu einem Durchströmen des porösen Filterkörpers gezwungen.

Dabei kann es vorkommen, dass das Abgas aus dem Strömungskanal in einen anderen Strömungskanal überströmt, welcher ebenfalls den Filterkörper in axialer Richtung nicht vollständig durchgreift oder auf der Auslassseite mittels eines Verschlussstopfens verschlossen ist. Entsprechend muss das Abgas erneut durch den Filterkörper strömen, wodurch bei hohen Abgasmassenströmen die Filterwirkung erhöht wird. Insgesamt erzielt also der Partikelfilter einen geringen Druckverlust bei niedrigeren Abgasmassenströmen, während bei höheren Abgasmassenströmen die Filterwirkung automatisch erhöht wird.

Die Erfindung betrifft weiterhin ein Verfahren zum Herstellen eines Partikelfilters für eine Abgasanlage, insbesondere eines Partikelfilters gemäß den vorstehenden Ausführungen, wobei der Partikelfilter über ein einen Abgaseinlass oder einen Abgasauslass aufweisendes Gehäuse und einen in dem Gehäuse angeordneten porösen Filterkörper verfügt, wobei der Filterkörper eine Vielzahl von gerade und strömungstechnisch parallel verlaufenden Strömungskanälen aufweist und bezüglich seiner Längsmittelachse konisch ist, wobei die Strömungskanäle jeweils eine parallel zu der Längsmittelachse des Filterkörpers verlaufende Längsmittelachse aufweisen, und wobei der Filterkörper auf der Einlassseite einen größeren Querschnitt aufweist als auf der Auslassseite, sodass sich nur ein Teil der Strömungskanäle bis hin zur Auslassseite erstreckt. Dabei ist vorgesehen, dass erste der Strömungskanäle jeweils einen Querschnitt aufweisen, der kleiner ist als ein Querschnitt von zweiten der Strömungskanäle, und der Filterkörper mit einer durch ein Beschichten des Filterkörpers hergestellten geschlossenen Mantelfläche versehen ist, die fluiddicht ist und die zweiten der Strömungskanäle in axialer Richtung verschließt.

Auf die Vorteile einer derartigen Ausgestaltung des Partikelfilters beziehungsweise einer derartigen Vorgehensweise bei dessen Herstellung wurde bereits hingewiesen. Sowohl das Verfahren als auch der Partikelfilter können gemäß den vorstehenden Ausführungen weitergebildet sein, sodass auf diese verwiesen wird.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine Längsschnittdarstellung eines Partikelfilters für eine Abgasanlage, sowie
- Figur 2: einen Querschnitt durch den Partikelfilter.

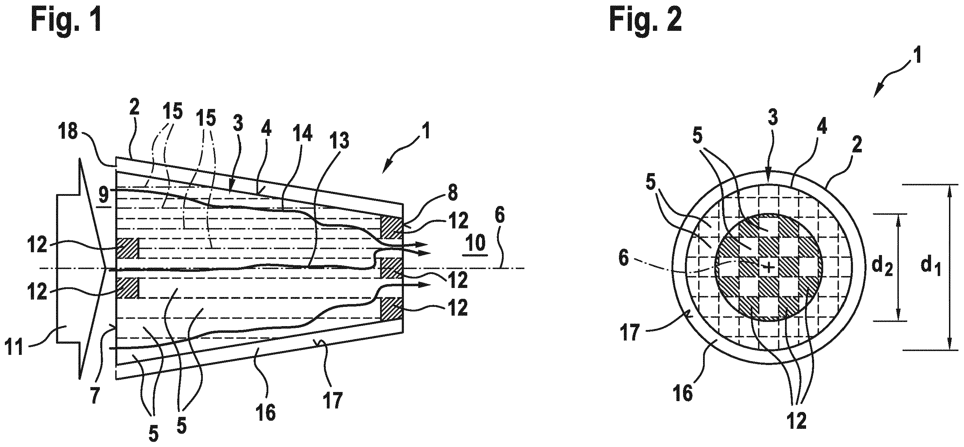

Die Figur 1 zeigt eine Längsschnittdarstellung eines Partikelfilters 1 für eine Abgasanlage. Der Partikelfilter 1 verfügt über ein Gehäuse 2, welches hier lediglich teilweise dargestellt ist. In dem Gehäuse 2 ist ein Filterkörper 3 angeordnet, der aus einem porösen Material besteht. Der Filterkörper 3 ist mit einer geschlossenen Mantelfläche 4 versehen, die beispielsweise in Form einer Beschichtung und/oder durch entsprechende Bearbeitung des Filterkörpers 3 realisiert ist. In dem Filterkörper 3 ist eine Vielzahl von strömungstechnisch parallel verlaufenden Strömungskanälen 5 ausgebildet, von welchen hier lediglich einige beispielhaft gekennzeichnet sind. Es ist erkennbar, dass der Filterkörper 3 bezüglich seiner Längsmittelachse 6 konisch ist, wobei er stirnseitig zwei Flächen 7 und 8 aufweist, die über die Mantelfläche 4 miteinander verbunden sind. Es ist weiter erkennbar, dass die Fläche 7 in radialer Richtung bezüglich der Längsmittelachse 6 größere Abmessungen aufweist als die Fläche 8, sodass insoweit der Flächeninhalt der Fläche 7 größer ist als der Flächeninhalt der Fläche 8.

Die Fläche 7 liegt auf einer Einlassseite 9, die Fläche 8 auf einer Auslassseite 10 des Filterkörpers 3 vor. Der Partikelfilter 1 beziehungsweise der Filterkörper 3 wird in Richtung des Pfeils 11 von Abgas durchströmt beziehungsweise angeströmt. Sowohl auf der Einlassseite 9 als auch auf der Auslassseite 10 sind jeweils mehrere der Strömungskanäle 5 mittels eines eingebrachten Verschlussstopfens 12 strömungstechnisch dicht verschlossen. Für die Einlassseite 9 bedeutet dies, dass das Abgas nicht in den jeweiligen Strömungskanal 5 einströmen kann. Ist der Strömungskanal 5 dagegen auf der Auslassseite 10 verschlossen, so kann das Abgas nicht durch ihn aus dem Filterkörper 3 ausströmen. Bevorzugt ist jeder der Strömungskanäle 5, insbesondere jeder der in axialer Richtung den Filterkörper 3 vollständig durchgreifenden Strömungskanäle 5, entweder auf seiner Einlassseite 9 oder auf der Auslassseite 10 mittels eines solchen Verschlussstopfens verschlossen.

Entsprechend stellt sich beispielsweise eine Durchströmung des Filterkörpers 3 gemäß dem Pfeil 13 ein. Der Pfeil 13 verdeutlicht beispielhaft, dass das Abgas zwar auf der Einlassseite 9 in einen der unverschlossenen Strömungskanäle 5 einströmen, auf der Auslassseite 10 jedoch nicht mehr aus ihm ausströmen kann, weil dieser dort verschlossen ist. Entsprechend muss das Abgas durch den porösen Filterkörper 3 hindurch in einen Strömungskanal 5 übertreten, welcher auf der Auslassseite 10 geöffnet ist. Durch dieses Übertreten beziehungsweise Hindurchtreten durch den Filterkörper 3 wird das Abgas gereinigt, insbesondere von Partikeln zumindest teilweise befreit.

Vorstehend wurde bereits erläutert, dass der Filterkörper 3 auf der Einlassseite 9 größer ist als auf der Auslassseite 10. Entsprechend liegen Strömungskanäle 5 vor, welche auf der Einlassseite 9 des Filterkörpers 3 beginnen, jedoch nicht in axialer Richtung vollständig durch den Filterkörper 3 hindurchtreten, weil sie zuvor von der Mantelfläche 4 verschlossen sind. Diese Strömungskanäle 5 sind bevorzugt auf der Einlassseite 9 stets unverschlossen. Dort in diese Strömungskanäle 5 eintretendes Abgas muss wenigstens einfach, teilwiese jedoch auch mehrfach, durch den porösen Filterkörper 3 hindurchtreten, um in einen auf der Auslassseite 10 unverschlossenen Strömungskanal 5 zu gelangen. Auf diese Art und Weise wird eine besonders hohe Filterwirkung erzielt. Der Strömungsweg von Abgas für diesen Fall ist durch den Pfeil 14 angedeutet.

Grundsätzlich verlaufen die Strömungskanäle 5 gerade durch den Filterkörper 3 hindurch. Dabei weisen sie zumindest teilweise jeweils eine Längsmittelachse 15 auf, was für einen Teil der Strömungskanäle 5 angedeutet ist. Die Längsmittelachse 15 verläuft für wenigstens einige der Strömungskanäle 5 jeweils über zumindest einen Teil der jeweiligen axialen Erstreckung des Strömungskanals 5 parallel zu der Längsmittelachse 6 des Filterkörpers 3. Die Längsmittelachsen 15 stehen insoweit senkrecht auf der Einlassseite 9 und/oder der Auslassseite 10.

Der Filterkörper 3 ist mittels eines Haltelements 16 in dem Gehäuse 2 gelagert. Dabei liegt das Halteelement 16 einerseits an der Mantelfläche 4 und andererseits an einer konischen Innenwand 17 des Gehäuses 2 an. Entsprechend stützt sich der Filterkörper 3 über das Haltelement 16 an der Innenwand 17 des Gehäuses 2 ab. Das Halteelement 16 ist elastisch ausgestaltet, beispielsweise liegt es in Form einer Fasermatte vor. Das Halteelement 16 ist bevorzugt fluiddicht und liegt sowohl an der Mantelfläche 4 als auch der Innenwand 17 fluiddicht an, sodass Abgas nicht zwischen der Mantelfläche 4 und der Innenwand 17 hindurch an dem Filterkörper 3 vorbeiströmen kann.

Der Filterkörper 3 ist mit axialem Spiel in dem Gehäuse 2 angeordnet. Das Spiel wird dabei auf zumindest einer Seite des Filterkörpers 3, insbesondere auf der Einlassseite 9, mittels eines Endanschlags 18 begrenzt, welches hier beispielsweise in Form eines Stützrings oder eines Stützgitters vorliegt. Eine derartige Ausgestaltung des Partikelfilters 1 hat den Vorteil, dass mit steigendem Abgasmassenstrom eine größer werdende Kraft von dem Abgas auf den Filterkörper 3 ausgeübt wird, welche diesen in Richtung der Abgasströmung, also in Strömungsrichtung des Abgases, drängt. Die Kraft drängt den Filterkörper 3 an das Halteelement 16 und von dem Endanschlag 18 fort. Je größer der Massenstrom ist, umso größer ist die von dem Abgas auf den Filterkörper 3 ausgeübte Kraft, sodass der Filterkörper 3 umso weiter von dem Endanschlag 18 fortverlagert wird, je größer der Abgasmassenstrom ist.

Umso größer jedoch die von dem Abgas bewirkte Kraft ist, umso größer wird die von dem Halteelement 16 im Gegenzug auf den Filterkörper 3 aufgeprägte Rückstellkraft, welche auf ein Verlagern des Filterkörpers 3 in dessen Ausgangsstellung gerichtet ist. Hiervon hängt jedoch auch die Dichtwirkung zwischen dem Halteelement 16 einerseits und dem Mantelfläche 4 sowie der Innenwand 17 andererseits ab. Somit steigt also die Dichtwirkung mit zunehmendem Abgasmassenstrom. Auch bewirkt die aufgrund des konischen Filterkörpers 3 schräge Mantelfläche 4 ein sanftes Ableiten des Abgases, sodass der Druckverlust des Partikelfilters 1 gegenüber bekannten Partikelfiltern 1 deutlich reduziert ist.

Die Figur 2 zeigt eine schematische Querschnittsdarstellung des Partikelfilters 1. Zu erkennen sind sowohl die Einlassseite 9 als auch die Auslassseite 10 des Filterkörpers 3. Es wird deutlich, dass die entsprechenden Flächen 7 und 8 jeweils rund sind. Die Einlassseite 9 weist dabei den Durchmesser d₁ und die Auslassseite 10 den Durchmesser d₂ auf. Bei niedrigeren Abgasmassenströmen konzentriert sich das Abgas auf der Einlassseite 9 auf diejenigen Strömungskanäle 5, welche in axiale Richtung den Filterkörper 3 vollständig durchgreifen, weil diese den geringsten Strömungswiderstand aufweisen. Je höher jedoch der Abgasmassenstrom wird, umso mehr Abgas tritt in diejenigen Strömungskanäle 5 ein, welche in axiale Richtung den Filterkörper 3 lediglich teilweise durchgreifen. Hierauf wurde vorstehend bereits hingewiesen.

Es kann nun vorgesehen sein, dass die Strömungskanäle 5 in erste Strömungskanäle und zweite Strömungskanäle unterteilt sind, wobei die ersten Strömungskanäle und die zweiten Strömungskanäle jeweils untereinander denselben Querschnitt aufweisen. Dabei weicht der Querschnitt der ersten Strömungskanäle jedoch von dem Querschnitt der zweiten Strömungskanäle ab, insbesondere ist er kleiner. Bevorzugt werden nun solche Strömungskanäle 5 als erste Strömungskanäle herangezogen, die den Filterkörper 3 in axialer Richtung vollständig durchgreifen. Die zweiten Strömungskanäle sind dagegen solche, welche lediglich teilweise durch den Filterkörper 3 in axiale Richtung hindurchlaufen.

## Patentansprüche

1. Partikelfilter (1) für eine Abgasanlage, insbesondere eines Kraftfahrzeugs, mit einem einen Abgaseinlass und einen Abgasauslass aufweisenden Gehäuse (2) und einem in dem Gehäuse (2) angeordneten porösen Filterkörper (3), wobei der Filterkörper (3) eine Vielzahl von gerade und strömungstechnisch parallel verlaufenden Strömungskanälen (5) aufweist und bezüglich seiner Längsmittelachse (6) konisch ist, wobei die Strömungskanäle (5) jeweils eine parallel zu der Längsmittelachse (6) des Filterkörpers (3) verlaufende Längsmittelachse (15) aufweisen, und wobei der Filterkörper (3) auf der Einlassseite (9) einen größeren Querschnitt aufweist als auf der Auslassseite (10), sodass sich nur ein Teil der Strömungskanäle (5) bis hin zur Auslassseite (10) erstreckt, **dadurch gekennzeichnet, dass** erste der Strömungskanäle (5) jeweils einen Querschnitt aufweisen, der kleiner ist als ein Querschnitt von zweiten der Strömungskanäle (5), und der Filterkörper (3) mit einer durch ein Beschichten des Filterkörpers (3) hergestellten geschlossenen Mantelfläche (4) versehen ist, die fluiddicht ist und die zweiten der Strömungskanäle (5) in axialer Richtung verschließt.

2. Partikelfilter nach Anspruch 1, **dadurch gekennzeichnet, dass** das auf einer dem Abgaseinlass zugewandten Einlassseite (9) des Filterkörpers (3) sowie auf einer dem Abgasauslass zugewandten Auslassseite (10) jeweils mehrere der Strömungskanäle (5) zumindest teilweise mittels eines eingebrachten Verschlussstopfens (12) verschlossen sind.

3. Partikelfilter nach einem der vorhergehenden Ansprüche, **dadurch gekennzeichnet, dass** auf der Einlassseite (9) diejenigen Strömungskanäle (5) verschlossen sind, die auf der Auslassseite (10) austreten und unverschlossen sind.

4. Partikelfilter nach einem der vorhergehenden Ansprüche, **dadurch gekennzeichnet, dass** sich der Filterkörper (3) über ein an der Mantelfläche (4) anliegendes Halteelement (16) an einer konischen Innenwand (17) des Gehäuses (2) abstützt.

5. Partikelfilter nach einem der vorhergehenden Ansprüche, **dadurch gekennzeichnet, dass** das Halteelement (16) elastisch ist.

6. Partikelfilter nach einem der vorhergehenden Ansprüche, **dadurch gekennzeichnet, dass** der Filterkörper (3) in axialer Richtung mit Spiel in dem Gehäuse (2) angeordnet ist.

7. Partikelfilter nach einem der vorhergehenden Ansprüche, **dadurch gekennzeichnet, dass** das Spiel des Filterkörpers (3) in dem Gehäuse (2) mittels wenigstens eines Endanschlags (18) begrenzt ist.

8. Verfahren zum Herstellen eines Partikelfilters (1) für eine Abgasanlage, insbesondere eines Partikelfilters nach einem oder mehreren der vorhergehenden Ansprüche, wobei der Partikelfilter (1) über ein einen Abgaseinlass und einen Abgasauslass aufweisendes Gehäuse (2) und einen in dem Gehäuse (2) angeordneten porösen Filterkörper (3) verfügt, wobei der Filterkörper (3) eine Vielzahl von gerade und strömungstechnisch parallel verlaufenden Strömungskanälen (5) aufweist und bezüglich seiner Längsmittelachse (6) konisch ausgebildet wird, wobei die Strömungskanäle (5) jeweils eine parallel zu der Längsmittelachse (6) des Filterkörpers (3) verlaufende Längsmittelachse (15) aufweisen, und wobei der Filterkörper (3) auf der Einlassseite (9) einen größeren Querschnitt aufweist als auf der Auslassseite (10), sodass sich nur ein Teil der Strömungskanäle (5) bis hin zur Auslassseite (10) erstreckt, **dadurch gekennzeichnet, dass** erste der Strömungskanäle (5) jeweils einen Querschnitt aufweisen, der kleiner ist als ein Querschnitt von zweiten der Strömungskanäle (5), und der Fluidkörper (3) mit einer durch ein Beschichten des Filterkörpers (3) hergestellten geschlossenen Mantelfläche (4) versehen wird, die fluiddicht ist und die zweiten der Strömungskanäle (5) in axialer Richtung verschließt.

## Claims

1. Particulate filter (1) for an exhaust system, in particular of a motor vehicle, having a housing (2), having an exhaust inlet and an exhaust outlet, and a porous filter body (3) arranged in the housing (2), wherein the filter body (3) has a plurality of flow passages (5) running straight and parallel in respect of flow and is conical in relation to its longitudinal centre axis (6), wherein the flow passages (5) each have a longitudinal centre axis (15) running parallel to the longitudinal centre axis (6) of the filter body (3), and wherein the filter body (3) has a larger cross-section on the inlet side (9) than on the outlet side (10), such that only part of the flow passages (5) extend as far as the outlet side (10), **characterised in that** first of the flow passages (5) each have a cross-section that is smaller than a cross-section of second of the flow passages (5), and the filter body (3) is provided with a closed lateral surface (4) produced by means of a coating of the filter body (3), said lateral surface being fluid-tight and closing the second of the flow passages (5) in axial direction.

2. Particulate filter according to claim 1, **characterised in that,** on an inlet side (9) of the filter body (3) facing the exhaust inlet and also on an outlet side (10) facing the exhaust outlet, several of the flow passages (5) are closed respectively at least in part by means of an inserted plug (12).

3. Particulate filter according to any one of the preceding claims, **characterised in that,** on the inlet side (9), those flow passages (5) are closed, which exit on the outlet side (10) and are unclosed.

4. Particulate filter according to any one of the preceding claims, **characterised in that** the filter body (3) is supported on a conical inner wall (17) of the housing (2) by way of a retaining element (16) lying against the lateral surface (4).

5. Particulate filter according to any one of the preceding claims, **characterised in that** the retaining element (16) is elastic.

6. Particulate filter according to any one of the preceding claims, **characterised in that** the filter body (3) is arranged in axial direction with play in the housing (2).

7. Particulate filter according to any one of the preceding claims, **characterised in that** the play of the filter body (3) in the housing (2) is limited by means of at least one end stop (18).

8. Method for producing a particulate filter (1) for an exhaust system, in particular a particulate filter according to one or more of the preceding claims, wherein the particulate filter (1) is equipped with a housing (2), having an exhaust inlet and an exhaust outlet, and with a porous filter body (3) arranged in the housing (2), wherein the filter body (3) has a plurality of flow passages (5) running straight and parallel in respect of flow and is of conical design in relation to its longitudinal centre axis (6), wherein the flow passages (5) each have a longitudinal centre axis (15) running parallel to the longitudinal centre axis (6) of the filter body (3), and wherein the filter body (3) has a larger cross-section on the inlet side (9) than on the outlet side (10), such that only some of the flow passages (5) extend as far as the outlet side (10), **characterised in that** first of the flow passages (5) each have a cross-section that is smaller than a cross-section of second of the flow passages (5), and the fluid body (3) is provided with a closed lateral surface (4) produced by means of a coating of the filter body (3), said lateral surface being fluid-tight and closing the second of the flow passages (5) in axial direction.

## Revendications

1. Filtre à particules (1) pour un système d'échappement, en particulier d'un véhicule automobile, avec un boîtier (2) présentant une entrée de gaz d'échappement et une sortie de gaz d'échappement et avec un corps de filtre (3) poreux agencé dans le boîtier (2), dans lequel le corps de filtre (3) présente une pluralité de canaux d'écoulement (5) qui sont parallèles en ligne droite et du point de vue de la technique des fluides et est conique par rapport à son axe médian longitudinal (6), dans lequel les canaux d'écoulement (5) présentent chacun un axe médian longitudinal (15) qui est parallèle à l'axe médian longitudinal (6) du corps de filtre (3) et dans lequel le corps de filtre (3) présente sur le côté entrée (9) une plus grande section transversale que sur le côté sortie (10) de telle sorte que seule une partie des canaux d'écoulement (5) s'étend jusqu'au côté sortie (10), **caractérisé en ce que** des premiers des canaux d'écoulement (5) présentent à chaque fois une section transversale qui est plus petite qu'une section transversale de deuxièmes des canaux d'écoulement (5) et le corps de filtre (3) est muni d'une surface enveloppante fermée (4) qui est fabriquée par un revêtement du corps de filtre (3) et qui est étanche aux fluides et ferme les deuxièmes des canaux d'écoulement (5) en direction axiale.

2. Filtre à particules selon la revendication 1, **caractérisé en ce que,** sur un côté entrée (9), proche de l'entrée de gaz d'échappement, du corps de filtre (3) ainsi que sur un côté sortie (10) proche de la sortie de gaz d'échappement, à chaque fois plusieurs des canaux d'écoulement (5) sont fermés au moins partiellement au moyen d'un bouchon (12) mis en place.

3. Filtre à particules selon l'une quelconque des revendications précédentes, **caractérisé en ce que** ceux des canaux d'écoulement (5) qui sortent du côté sortie (10) et ne sont pas fermés sont fermés sur le côté entrée (9).

4. Filtre à particules selon l'une quelconque des revendications précédentes, **caractérisé en ce que** le corps de filtre (3) s'appuie à une paroi intérieure conique (17) du boîtier (2) par l'intermédiaire d'un élément de fixation (16) adjacent à la surface enveloppante (4).

5. Filtre à particules selon l'une quelconque des revendications précédentes, **caractérisé en ce que** l'élément de fixation (16) est élastique.

6. Filtre à particules selon l'une quelconque des revendications précédentes, **caractérisé en ce que** le corps de filtre (3) est agencé dans le boîtier (2) avec du jeu en direction axiale.

7. Filtre à particules selon l'une quelconque des revendications précédentes, **caractérisé en ce que** le jeu du corps de filtre (3) dans le boîtier (2) est limité au moyen d'au moins une butée d'extrémité (18).

8. Procédé de fabrication d'un filtre à particules (1) pour un système d'échappement, en particulier d'un filtre à particules selon une ou plusieurs des revendications précédentes, dans lequel le filtre à particules (1) dispose d'un boîtier (2) présentant une entrée de gaz d'échappement et une sortie de gaz d'échappement et d'un corps de filtre (3) poreux agencé dans le boîtier (2), dans lequel le corps de filtre (3) présente une pluralité de canaux d'écoulement (5) qui sont parallèles en ligne droite et du point de vue de la technique des fluides et est réalisé conique par rapport à son axe médian longitudinal (6), dans lequel les canaux d'écoulement (5) présentent chacun un axe médian longitudinal (15) qui est parallèle à l'axe médian longitudinal (6) du corps de filtre (3) et dans lequel le corps de filtre (3) présente sur le côté entrée (9) une plus grande section transversale que sur le côté sortie (10) de telle sorte que seule une partie des canaux d'écoulement (5) s'étend jusqu'au côté sortie (10), **caractérisé en ce que** des premiers des canaux d'écoulement (5) présentent à chaque fois une section transversale qui est plus petite qu'une section transversale de deuxièmes des canaux d'écoulement (5) et le corps de filtre (3) est muni d'une surface enveloppante fermée (4) qui est fabriquée par un revêtement du corps de filtre (3) et qui est étanche aux fluides et ferme les deuxièmes des canaux d'écoulement (5) en direction axiale.
